# EUROPÄISCHE PATENTSCHRIFT

(11) **EP 1 886 041 B1**
(45) Veröffentlichungstag und Bekanntmachung des Hinweises auf die Patenterteilung: **21.01.2009**
(21) Anmeldenummer: 06724759.3
(22) Anmeldetag: 09.05.2006
(51) Int. Cl.: F16D 65/12, F16J 15/56

(54) **EINRICHTUNG ZUR LAGERUNG EINES BAUTEILES AUF EINER NABE**
DEVICE FOR MOUNTING A COMPONENT ON A HUB
DISPOSITIF DE LOGEMENT D'UN COMPOSANT SUR UN MOYEU

(30) Priorität: 20.05.2005 DE 102005023411
(43) Veröffentlichungstag der Anmeldung: 13.02.2008
(73) Patentinhaber: KNORR-BREMSE SYSTEME FÜR NUTZFAHRZEUGE GMBH, 80809 München (DE)
(72) Erfinder: SPRINGER, Mario, 94535 Eging am See (DE)
(74) Vertreter: Mattusch, Gundula
(86) Internationale Anmeldenummer: PCT/EP2006/004307
(87) Internationale Veröffentlichungsnummer: WO 2006/122673

(56) Entgegenhaltungen:
- EP-A- 0 730 113
- DE-A1- 2 359 810
- DE-A1- 3 414 821
- FR-A- 2 718 211

## Beschreibung

Die vorliegende Erfindung betrifft eine Einrichtung entsprechend dem Oberbegriff des Anspruchs 1.

Derartige Einrichtungen sind beispielsweise als Bremsscheiben/Nabenverbindungen bekannt. Dabei wird die Einrichtung gebildet durch eine ineinander greifende Verzahnung der Bremsscheibe einerseits und der Nabe anderseits, durch die sowohl eine Bremsmomentenübertragung von der Bremsscheibe auf die Nabe möglich ist wie auch eine Verschiebung der Bremsscheibe in axialer Richtung, wie sie aus funktionalen Gründen, z.B. bei Festsattelkonstruktionen, gewünscht wird. Überbrückt der Verschiebeweg nur den Arbeitshub der Bremse und nicht den Verschleißweg, wird auch von einer Mikroverschiebbarkeit gesprochen.

Bei dieser Konstruktion ergeben sich jedoch hinsichtlich einer dauerhaften Funktionsfähigkeit Probleme, da es schwierig ist, aufgrund der herrschenden Betriebsbedingungen eine wirksame Abdichtung des Verbindungsteiles herzustellen.

So treten aufgrund der beim Bremsen entstehenden Reibungswärme auch in diesem Bereich sehr hohe Temperaturen auf, denen die zur Verfügung stehenden elastischen Dichtmittel, insbesondere aus Elastomeren nicht gewachsen sind.

Aus diesem Grund liegt die Verzahnung, also das Verbindungsteil offen und ist den äußeren Einflüssen schutzlos ausgesetzt.

Insbesondere durch Korrosion, aber auch durch im Fahrbetrieb auftretende Verschmutzungen kann es zu Einschränkungen der Funktionsfähigkeit, vor allem zu Einschränkungen der Verschiebbarkeit kommen, so dass die Standzeit der Bremsscheiben/Nabenverbindungen relativ kurz ist.

Naturgemäß führt dies zu erheblichen wirtschaftlichen Nachteilen, da eine Reparatur nur aufwendig durchzuführen und überdies mit entsprechenden Kosten verbunden ist. Dies trifft gleichermaßen auf die daraus sich ergebenden Stillstandzeiten des Fahrzeuges zu, so dass die bekannte Bremsscheiben/Nabenverbindung insgesamt in wirtschaftlicher Hinsicht keinen optimalen Einsatz gewährleistet.

In der DE-A-23 59 810 ist eine Dichtungsmembran gezeigt und beschrieben, die zwei Räume unterschiedlichen Drucks gegeneinander abgrenzen soll, wobei dann ausschließlich axiale Drücke wirksam sind. Eine radiale Abstützung ist nicht vorgesehen, zumal ausdrücklich Maßnahmen vorgeschlagen werden, um eine entsprechende Belastung der Membran zu vermeiden.

Der vorliegenden Erfindung liegt die Aufgabe zugrunde, eine Einrichtung der gattungsgemäßen Art so weiter zu entwickeln, dass sie zu einem wirtschaftlich optimierten Betrieb einer Bremse führt, bei gleichzeitig geringen Fertigungskosten.

Diese Aufgabe wird durch eine Einrichtung gelöst, die die Merkmale des Anspruchs 1 aufweist.

Diese Konstruktion löst sich vollständig von dem bislang praktizierten Gedanken einer Verzahnung zwischen der Bremsscheibe und der Nabe. Stattdessen ist ein Bauteil geschaffen, das sehr einfach aufgebaut ist, in seiner Funktionsfähigkeit und Betriebssicherheit jedoch wesentliche Verbesserungen bietet.

Dabei beschränkt sich der Einsatz der neuen Einrichtung nicht auf die Verwendung im Bremsscheiben/Radnaben-Bereich eines Nutzfahrzeuges, sondern ist überall dort einsetzbar, wo eine radiale Abstützung und gleichzeitig eine axiale Mikroverschiebung zweier Bauteile zueinander bei hoher thermischer und mechanischer Belastung gefordert werden.

Die im Bereich beider Stirnseiten der Baueinheit Lagerinnen-/Lageraußenring vorgesehenen Membranen, stellen zum einen ein Verbindungsteil für beide Ringe dar, die axial zueinander um das erforderliche Maß verschieblich sind, und zum andern eine hermetische Abdichtung der zwischen den beiden Ringen gebildeten Innenbereiche, zumindest auf einer Seite, vorzugsweise jedoch auf beiden Seiten. Dabei sind selbstverständlich der Lageraußenring mit der Bremsscheibe und der Lagerinnenring mit der Nabe fest verbunden.

Dies kann auf unterschiedliche Art und Weise erfolgen. Denkbar ist beispielsweise den Lageraußenring durch Form- und/oder Kraftschluss oder durch Schrauben mit der Bremsscheibe zu verbinden.

Für einen Formschluss können Formschlussmittel vorgesehen sein, die in entsprechend ausgebildete Anschlussteile des Lageraußenringes einerseits und der Bremsscheibe andererseits eingreifen. Auch ist eine Verzahnung denkbar, wobei dann die Zähne so ineinander greifen, dass sowohl eine axiale Sicherung wie auch eine Verdrehsicherung gewährleistet ist.

Um die Einrichtung dauerhaft funktionsfähig zu halten, bestehen die Membranen aus Metall, wobei sie in ihrer Dicke so bemessen sind, dass eine Verschiebung des Lageraußen- zum Lagerinnenring problemlos möglich ist.

Durch die Materialwahl -zumindest funktionsrelevante Teile sind aus Metall- bleiben die durch die Bremsreibung entstehenden relativ hohen Temperaturen ohne Einfluss auf die Funktionsfähigkeit dieser Einrichtung, so dass die Standzeit insgesamt optimiert wird. Hierzu trägt selbstverständlich auch die durch die Membranen gegebene Abkapselung des Innenbereiches der Verbindung bei, durch die Witterungseinflüsse, die zu Korrosionen führen können, oder Verschmutzungen wirksam verhindert werden.

In diesem Innenbereich liegen der Lageraußen- und Lagerinnenring flächig aneinander, so dass auch bei der genannten Verschiebung in jedem Fall eine ausreichende radiale Abstützung gewährleistet ist.

Zur Vorbeugung gegen einen Dauerbruch sind die Membranen mit vorzugsweise umlaufenden Sicken versehen, durch die ein Knicken/Falten verhindert wird. Im übrigen sind die einzelnen Bauteile, aus denen die Einrichtung besteht, sehr einfach herzustellen, wobei die Membranen als Blech-Stanzteile ausgebildet sind.

Fixiert werden die Membranen mittels Druckringen, von denen einer die jeweilige Membrane an dem Lageraußenring und einer am Lagerinnenring fixiert.

Vorteilhafte Weiterbildungen der Erfindung sind in den Unteransprüchen gekennzeichnet.

Ein Ausführungsbeispiel wird nachfolgend anhand der beigefügten Zeichnungen beschrieben.

Es zeigen:
- Figur 1: eine in einer Bremsscheiben/Radnaben-Verbindung montierte erfindungsgemäße Einrichtung in einem geschnittenen Teilausschnitt
- Figur 2: eine vergrößerte Einzelheit der Figur 1 gemäß dem Ausschnitt II
- Figur 3: ein weiteres Ausführungsbeispiel der als Einzelheit dargestellten erfindungsgemäßen Einrichtung in einer teilweise ausgeschnittenen perspektivischen Ansicht
- Figur 4: einen Querschnitt durch die Einrichtung nach Figur 3
- Figur 5: eine Einzelheit des Querschnitts nach Figur 4 in einer vergrößerten Darstellung

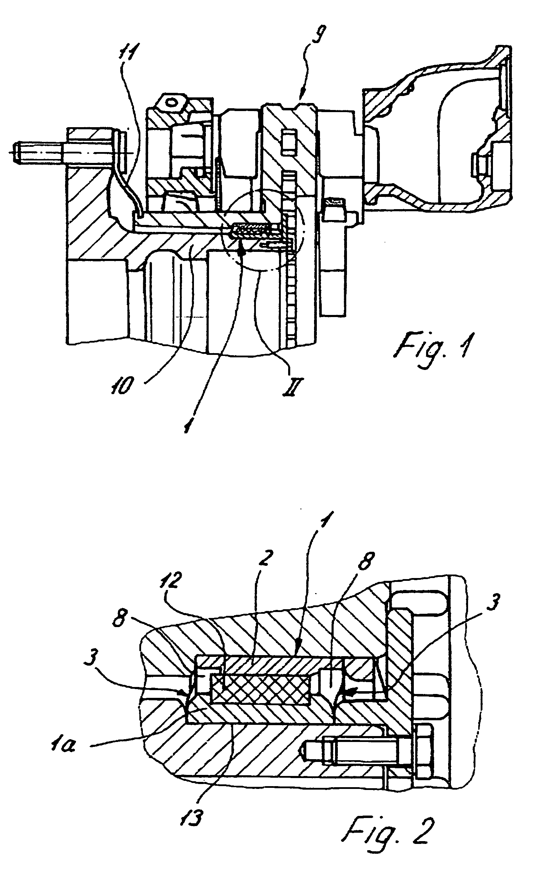

In der Figur 1 ist ein Teilausschnitt einer Scheibenbremse für ein Nutzfahrzeug dargestellt, die eine Scheibenbremse 9 aufweist, die verdrehsicher sowie axial mikroverschiebbar an einer Radnabe 10 befestigt ist.

Zur radialen Abstützung der Bremsscheibe 9 ist eine axial auslenkbare Scheibe 11 im Sinne einer Tellerfeder, die einerseits mit der Radnabe 10 und andererseits mit der Bremsscheibe 9 verbunden ist, sowie eine Einrichtung in Form eines Lagers 1 vorgesehen, das gleichzeitig die Verschiebbarkeit der Bremsscheibe 9 über den Arbeitshub ermöglicht.

Erfindungsgemäß besteht die Einrichtung, also das Lager 1, aus einem an der Nabe 10 angeschlossenen Lagerinnenring 1a und einem mit der Bremsscheibe 9 fest verbundenen Lageraußenring 2. Bei dem in der Figur 2 gezeigten Ausführungsbeispiel stützen sich die einander zugewandten Mantelflächen des Lagerinnen- 1a und des Lageraußenringes 2 an einem Stützring 12 ab, der in axialer Richtung verschiebegesichert in einer Ausnehmung 13 des Lagerinnenringes 1a einliegt, während der Lageraußenring 2 entsprechend dem Verschiebeweg auf dem Stützring 12 gleiten kann.

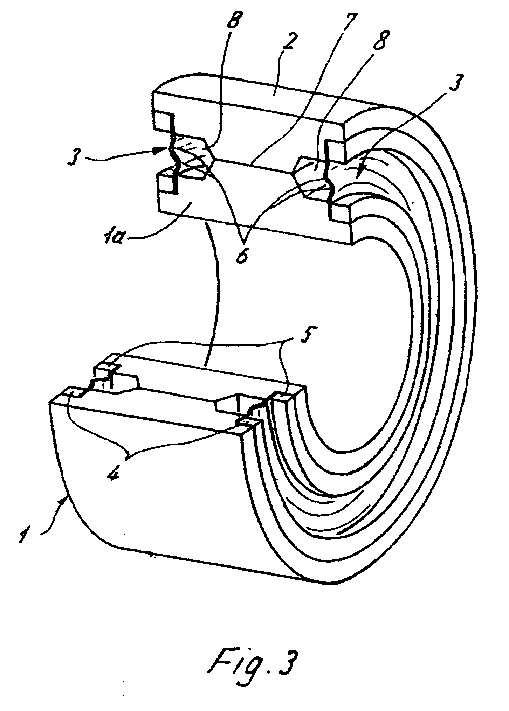

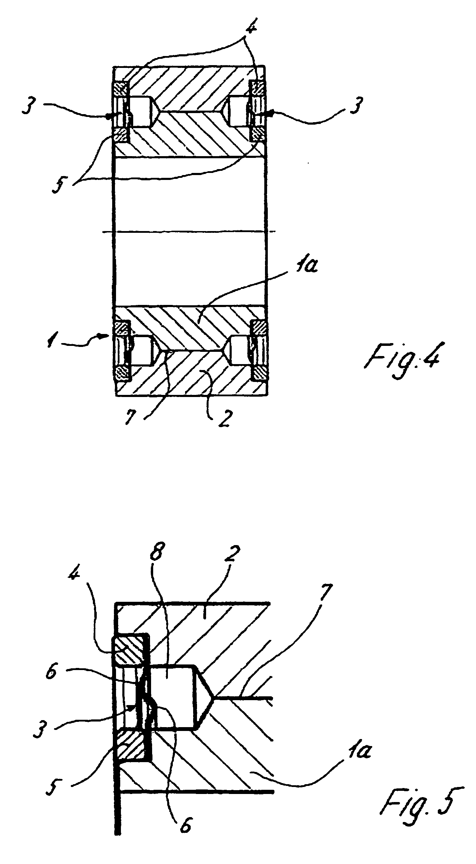

Bei dem in den Figuren 2 bis 5 gezeigten Beispiel liegen der Lagerinnenring 1a und der Lageraußenring 2 im Bereich gemeinsamer Auflageflächen 7 aneinander, wodurch unmittelbar eine radiale Abstützung des Lageraußenringes 2 am Lagerinnenring 1 a erfolgt und dadurch eine radiale Abstützung der angeschlossenen Bremsscheibe 9 an der Nabe 10. Dabei verlaufen die Auflageflächen 7 axial und umfänglich.

Im Bereich der beiden, sich gegenüber liegenden Stirnseiten des Lagerinnenringes 1a und des Lageraußenringes 2 ist jeweils eine aus Metall bestehende, axial auslenkbare Membran 3 vorgesehen, die als Ringscheibe ausgebildet ist und sich radial erstreckt. Um ein Knicken/Falten der Membranen 3 durch die axialen Auslenkungen und damit einen Dauerbruch zu vermeiden, ist jede Membran 3 mit umlaufenden, konzentrischen Sicken 6 versehen.

Jede Membran 3 ist über einen Innendruckring 5 mit dem Lagerinnenring 1a und über einen Außendruckring 4 mit dem Lageraußenring 2 verbunden, wobei der Innendruckring 5 und der Außendruckring 4 formschlüssig in den Lagerinnenring 1a bzw. der Lageraußenring 2 eingreifen und die zugeordnete Membran 3 sowohl axial wie auch in Umfangsrichtung fixieren.

Jede Membran 3 deckt eine Ringnut 8 ab, die sich in Fortsetzung der Auflagefläche 7 nach außen hin erstreckt und zwar konzentrisch.

Durch diese Ringnut 8 wird ermöglicht, dass die Membran 3 bei der axialen Relativbewegung des Lagerinnen- 1 a zum Lageraußenring 2 ungehindert auslenken kann.

### Bezugszeichenliste

- 1: Lager
- 1a: Lagerinnenring
- 2: Lageraußenring
- 3: Membran
- 4: Außendruckring
- 5: Innendruckring
- 6: Sicke
- 7: Auflagefläche
- 8: Ringnut
- 9: Bremsscheibe
- 10: Radnabe
- 11: Scheibe
- 12: Stützring
- 13: Ausnehmung

## Patentansprüche

1. Einrichtung zur radialen Abstützung und axial verschiebbaren Lagerung eines im wesentlichen ringförmigen Bauteiles auf einer damit verdrehsicher verbundenen Nabe, insbesondere einer Bremsscheibe (9) auf einer Radnabe (10) eines Nutzfahrzeuges, **dadurch gekennzeichnet, dass** die Einrichtung aus einem an der Nabe angeschlossenen Lagerinnen- (1a) und einem, mit dem Bauteil verbundenen Lageraußenring (2) besteht, die sich gegenseitig radial abstützen und im Bereich ihrer beiden gemeinsamen Stirnseiten jeweils durch eine axial auslenkbare, umlaufende und das Innere hermetisch abdichtende Membran (3) miteinander verbunden sind.

2. Einrichtung nach Anspruch 1, **dadurch gekennzeichnet, dass** der Lagerinnenring (1a) und der Lageraußenring (2) flächig aneinander liegen.

3. Einrichtung nach einem der Ansprüche 1 oder 2, **dadurch gekennzeichnet, dass** sich an gebildete Auflageflächen (7) des Lagerinnenringes (1a) und des Lageraußenringes (2) beidseitig zu den Stirnseiten hin gerichtet jeweils eine umlaufende Ringnut (8) anschließt.

4. Einrichtung nach Anspruch 3, **dadurch gekennzeichnet, dass** jede Ringnut (8) durch eine Membran (3) verschlossen ist.

5. Einrichtung nach Anspruch 4, **dadurch gekennzeichnet, dass** jede Membran (3) mit mindestens einer konzentrisch verlaufenden Sicke (6) versehen ist.

6. Einrichtung nach einem der Ansprüche 4 oder 5, **dadurch gekennzeichnet, dass** jede Membran (3) durch einen Außendruckring (4) am Lageraußenring (2) und durch einen Innendruckring (5) am Lagerinnenring (1a) sowohl axial wie auch in Umfangsrichtung fixiert ist.

7. Einrichtung nach einem der Ansprüche 3 bis 6, **dadurch gekennzeichnet, dass** die Auflageflächen (7) axial und umfänglich verlaufen.

8. Einrichtung nach Anspruch 6, **dadurch gekennzeichnet, dass** der Lagerinnenring (1a), der Lageraußenring (2), die Membranen (3), die Außendruckringe (4) und die Innendruckringe (5) aus einem hitzebeständigen Material, vorzugsweise Metall bestehen.

9. Einrichtung nach einem der vorhergehenden Ansprüche, **dadurch gekennzeichnet, dass** der Lageraußenring (2) einstückig an das Bauteil angeformt ist.

10. Einrichtung nach einem der vorhergehenden Ansprüche, **dadurch gekennzeichnet, dass** der Lageraußenring (2) form- und/oder kraftschlüssig und/oder stoffschlüssig mit dem Bauteil verbunden ist.

11. Einrichtung nach einem der vorhergehenden Ansprüche, **dadurch gekennzeichnet, dass** der Lagerinnenring (1a) an der Nabe einstückig angeformt ist.

12. Einrichtung nach einem der vorhergehenden Ansprüche, **dadurch gekennzeichnet, dass** der Lagerinnenring (1a) form- und/oder kraftschlüssig und/oder stoffschlüssig mit der Nabe verbunden ist.

13. Einrichtung nach einem der vorhergehenden Ansprüche, **dadurch gekennzeichnet, dass** die einander zugewandten Mantelseiten des Lagerinnenringes (1a) und des Lageraußenringes (2) zumindest teilweise an einem Stützring (12) anliegen.

14. Einrichtung nach Anspruch 13, **dadurch gekennzeichnet, dass** der Stützring (12) in einer Ausnehmung (13) des Lagerinnenringes (1a) oder des Lageraußenringes (2) axial verschiebegesichert einliegt.

## Claims

1. Device for the radial support and the axially movable mounting of a substantially annular component on a hub non-rotatably joined thereto, in particular of a brake disc (9) on the wheel hub (10) of a commercial vehicle, **characterised in that** the device comprises a bearing inner ring (1a) joined to the hub and a bearing outer ring (2) joined to the component, which mutually support one another radially and which are joined to one another in the region of their two common end faces by an axially deflectable, continuous membrane (3) which hermetically seals the interior.

2. Device according to claim 1, **characterised in that** the bearing inner ring (1a) and the bearing outer ring (2) are in flat contact with one another.

3. Device according to claim 1 or 2, **characterised in that** a continuous annular groove (8) adjoins each of the bearing surfaces (7) of the bearing inner ring (1a) and the bearing outer ring (2) on both sides towards the end faces.

4. Device according to claim 3, **characterised in that** each annular groove (8) is sealed by a membrane (3).

5. Device according to claim 4, **characterised in that** each membrane is provided with at least one concentrically oriented bead (6).

6. Device according to claim 4 or 5, **characterised in that** each membrane (3) is secured both axially and circumferentially to the bearing outer ring (2) by an external thrust washer (4) and to the bearing inner ring (1a) by an internal thrust washer (5).

7. Device according to any of claims 3 to 6, **characterised in that** the bearing surfaces (7) extend axially and circumferentially.

8. Device according to claim 6, **characterised in that** the bearing inner ring (1a), the bearing outer ring (2), the membranes (3) the external thrust washers (4) and the internal thrust washers (5) are made of a heat-resistant material, preferably metal.

9. Device according to any of the preceding claims, **characterised in that** the bearing outer ring (2) is integrated with the component.

10. Device according to any of the preceding claims, **characterised in that** the bearing outer ring (2) is joined to the component positively and/or non-positively and/or by adhesive force.

11. Device according to any of the preceding claims, **characterised in that** the bearing inner ring (1a) is integrated with the hub.

12. Device according to any of the preceding claims, **characterised in that** the bearing inner ring (1a) is joined to the hub positively and/or non-positively and/or by adhesive force.

13. Device according to any of the preceding claims, **characterised in that** the facing surface sides of the bearing inner ring (1a) and the bearing outer ring (2) at least partially bear against a backing ring (12).

14. Device according to claim 13, **characterised in that** the backing ring is secured against axial displacement in a recess (13) of the bearing inner ring (1a) or the bearing outer ring (2).

## Revendications

1. Dispositif d'appui radial et de logement axialement déplaçable d'un composant essentiellement annulaire sur un moyeu y relié de manière contre-rotative, en particulier d'un disque de frein (9) à un moyeu de roue (10) d'un véhicule utilitaire, **caractérisé en ce que** le dispositif se compose d'un anneau intérieur (1a) de palier, relié audit moyeu, et d'un anneau extérieur (2a) de palier, relié audit composant, auxdits deux anneaux s'appuyant l'un contre l'autre en sens radial et étant raccordé l'un à l'autre, dans la zone de leurs deux côtés frontaux joints, moyennant un diaphragme (3) périphérique respectif à déviation axiale, qui assure l'étanchéité hermétique de l'intérieur.

2. Dispositif selon la revendication 1, **caractérisé en ce que** ledit anneau intérieur de palier (1a) et ledit anneau extérieur de palier (2) portent en nappe l'un contre l'autre.

3. Dispositif selon une quelconque des revendications 1 ou 2, **caractérisé en ce qu'**une rainure annulaire périphérique (8) respective se joint aux aires d'appui (7) formées dudit anneau intérieur de palier (1a) et dudit anneau extérieur de palier (2) aux deux côtés en sens vers lesdits côtés frontaux.

4. Dispositif selon la revendication 3, **caractérisé en ce que** chaque rainure annulaire (8) est fermée moyennant un diaphragme (3).

5. Dispositif la revendication 4, **caractérisé en ce que** chaque diaphragme est pourvu d'au moins un collet (6) s'étendant en sens concentrique.

6. Dispositif selon une quelconque des revendications 4 ou 5, **caractérisé en ce que** chaque diaphragme (3) est fixé en sens axial et aussi en sens périphérique moyennant une bague de serrage extérieure (4) audit anneau extérieur de palier (2) et moyennant une bague de serrage intérieure (5) audit anneau intérieur de palier (1a).

7. Dispositif selon une quelconque des revendications 3 à 6, **caractérisé en ce que** lesdites aires d'appui (7) s'étendent en sens axial et en sens périphérique.

8. Dispositif selon la revendication 6, **caractérisé en ce que** ledit anneau intérieur de palier (1a), ledit anneau extérieur de palier (2), lesdits diaphragmes (3), lesdites bagues de serrage extérieures et lesdites bagues de serrage intérieures (5) sont faits en un matériau résistant à la chaleur, de préférence en métal.

9. Dispositif selon une quelconque des revendications précédentes, **caractérisé en ce que** ledit anneau extérieur de palier (2) est formé en une seule pièce audit composant.

10. Dispositif selon une quelconque des revendications précédentes, **caractérisé en ce que** ledit anneau extérieur de palier (2) est raccordé audit composant par engagement positif et/ou par adhérence et/ou par matière.

11. Dispositif selon une quelconque des revendications précédentes, **caractérisé en ce que** ledit anneau intérieur de palier (1a) est formé en une seule pièce audit moyeu.

12. Dispositif selon une quelconque des revendications précédentes, **caractérisé en ce que** ledit anneau intérieur de palier (1a) est raccordé audit composant par engagement positif et/ou par adhérence et/ou par matière.

13. Dispositif selon une quelconque des revendications précédentes, **caractérisé en ce que** les faces d'enveloppe, l'une en face de l'autre, dudit anneau intérieur de palier (1a) et dudit anneau extérieur de palier (2) portent, au moins en partie, contre une bague d'appui (12).

14. Dispositif selon la revendication 13, **caractérisé en ce que** ladite bague d'appui (12) reste dans un creux (13) dudit anneau intérieur de palier (1a) ou dudit anneau extérieur de palier (2), en étant protégée contre un déplacement axial.
